(19) **Europäisches Patentamt European Patent Office Office européen des brevets**

(11) **EP 4 293 941 B1**

(12) **EUROPEAN PATENT SPECIFICATION**

(45) Date of publication and mention of the grant of the patent:
**22.10.2025 Bulletin 2025/43**

(21) Application number: **22778451.9**

(22) Date of filing: **02.03.2022**

(51) International Patent Classification (IPC):
***H04L 1/18*** *(2023.01)*

(52) Cooperative Patent Classification (CPC):
**H04L 5/0055; H04L 1/1822; H04L 1/1854; H04L 5/0094;** H04W 72/232

(86) International application number:
**PCT/CN2022/078779**

(87) International publication number:
**WO 2022/206267 (06.10.2022 Gazette 2022/40)**

(54) **HARQ FEEDBACK METHOD AND APPARATUS, AND COMPUTER-READABLE STORAGE MEDIUM**

HARQ-FEEDBACKVERFAHREN UND -VORRICHTUNG SOWIE COMPUTERLESBARES SPEICHERMEDIUM

PROCÉDÉ ET APPAREIL DE RÉTROACTION HARQ ET SUPPORT DE STOCKAGE LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.04.2021 CN 202110356300**

(43) Date of publication of application:
**20.12.2023 Bulletin 2023/51**

(73) Proprietor: **Huawei Technologies Co., Ltd.
Shenzhen, Guangdong 518129 (CN)**

(72) Inventors:
- **QIAO, Yunfei
  Shenzhen, Guangdong 518129 (CN)**
- **CHEN, Ying
  Shenzhen, Guangdong 518129 (CN)**
- **WANG, Jun
  Shenzhen, Guangdong 518129 (CN)**

(74) Representative: **Pfenning, Meinig & Partner mbB
Patent- und Rechtsanwälte
Theresienhöhe 11a
80339 München (DE)**

(56) References cited:
WO-A1-2021/232403    CN-A- 111 431 681
CN-A- 111 435 868    CN-A- 112 291 167

- CMCC: "Discussion on implicit compatibility to support ATG scenarios in NTN", vol. RAN WG1, no. e-Meeting; 20200817 - 20200828, 7 August 2020 (2020-08-07), XP052347587, Retrieved from the Internet <URL:https://ftp.3gpp.org/tsg_ran/WG1_RL1/TSGR1_102-e/Docs/R1-2006213.zip R1-2006213.docx> [retrieved on 20200807]
- CMCC: "Discussion on timing relationship enhancements for NTN", vol. RAN WG1, no. e-Meeting; 20210125 - 20210205, 18 January 2021 (2021-01-18), XP051970621, Retrieved from the Internet <URL:https://ftp.3gpp.org/tsg_ran/WG1_RL1/TSGR1_104-e/Docs/R1-2101042.zip R1-2101042.docx> [retrieved on 20210118]
- ZTE: "Discussion on HARQ for NTN", vol. RAN WG1, no. e-Meeting; 20200817 - 20200828, 8 August 2020 (2020-08-08), XP052347339, Retrieved from the Internet <URL:https://ftp.3gpp.org/tsg_ran/WG1_RL1/TSGR1_102-e/Docs/R1-2005965.zip R1-2005965 Discussion on HARQ for NTN.doc> [retrieved on 20200808]

• CMCC: "Discussion on UL transmission timing for NTN", vol. RAN WG1, no. Reno, USA; 20191118 - 20191122, 9 November 2019 (2019-11-09), XP051823469, Retrieved from the Internet <URL:https://ftp.3gpp.org/tsg_ran/WG1_RL1/TSGR1_99/Docs/R1-1912535.zip R1-1912535.docx> [retrieved on 20191109]
• HUAWEI, HISILICON: "Discussion on HARQ enhancement for NTN", 3GPP DRAFT; R1-2100224, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. E-meeting; 20210125 - 20210205, 19 January 2021 (2021-01-19), Mobile Competence Centre ; 650, route des Lucioles ; F-06921 Sophia-Antipolis Cedex ; France , XP051970856

## Description

### TECHNICAL FIELD

This application relates to the field of wireless communication technologies, and in particular, to a hybrid automatic repeat request (hybrid automatic repeat request, HARQ) feedback method and apparatus, a computer program product, a computer-readable storage medium and a chip.

### BACKGROUND

With development of information technologies, communication is urgently required to be efficient, mobile, and diverse. Currently, satellites play an irreplaceable role in some important fields such as spatial communication, aeronautical communication, maritime communication, and military communication. Satellite communication has features such as a long communication distance, a large coverage area, and flexible networking, and can provide services for both fixed terminals and various mobile terminals. A conventional terrestrial network cannot provide seamless coverage for user equipment (user equipment, UE), especially in places in which a base station cannot be deployed, such as seas, deserts, and the air. Therefore, a non-terrestrial network is introduced into a 5G system. In the non-terrestrial network, a base station or some base station functions is/are deployed on a high-altitude platform or a satellite, to provide seamless coverage for the UE, and the high-altitude platform or the satellite is less affected by natural disasters, so that reliability of the 5G system can be improved.

In an existing communication system, a HARQ is often used to ensure data transmission reliability. When a base station (next generation NodeB, gNB) communicates with the UE, after receiving physical downlink shared channel (physical downlink shared channel, PDSCH) data sent by the gNB, the UE needs to send the HARQ to feed back whether decoding succeeds. If the UE receives the PDSCH data in a downlink data slot (slot) n, the UE needs to feed back HARQ information in a slot n+K1. K1 may be configured by the gNB.

In a current satellite standard, a maximum quantity of HARQ processes supported by data transmission is already increased to 32. In the current standard, an indication range of K1 is extended from 0 to 15 to 0 to 31. Therefore, how to indicate an extended HARQ feedback slot interval becomes an urgent problem to be resolved.

CMCC: "Discussion on timing relationship enhancements for NTN", 3GPP DRAFT; R1-2101042, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. e-Meeting; 20210125 - 20210205 18 January 2021 (2021-01-18) discloses methods for enhancing timing relationships in Non-Terrestrial Networks (NTN) through the configuration of the K_offset parameter. The document discusses the use of K_offset in initial access and the potential for its explicit or implicit signaling in system information. It also addresses the alignment of uplink and downlink frame timings, the necessity of updating K_offset after initial access, and its impact on various timing relationships such as those in configured grant transmissions and random access procedures.

CMCC: "Discussion on implicit compatibility to support ATG scenarios in NTN", 3GPP DRAFT; R1-2006213, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. e-Meeting; 20200817 - 20200828 7 August 2020 (2020-08-07) discusses the deployment scenarios and technical challenges for Air-to-Ground (ATG) networks within Non-Terrestrial Networks (NTN). The document outlines potential enhancements for timing and frequency synchronization in ATG scenarios, as well as solutions for managing interference between ATG and terrestrial networks. It also explores the possibility of using TDD duplex schemes and shared frequencies for both ATG and terrestrial networks, with specific proposals for supporting large cell coverage and high-speed aircraft.

ZTE: "Discussion on HARQ for NTN", 3GPP DRAFT; R1-2005965, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. e-Meeting; 20200817 - 20200828 8 August 2020 (2020-08-08) discusses the challenges and potential enhancements for Hybrid Automatic Repeat Request (HARQ) procedures in Non-Terrestrial Networks (NTN). The document highlights the need for increasing the number of HARQ processes to accommodate the long propagation delays and varying conditions in NTN. It also considers the impact of disabling HARQ feedback and proposes solutions to extend HARQ process numbers, improve performance, and manage scheduling efficiently within NTN scenarios.

CMCC: "Discussion on UL transmission timing for NTN", 3GPP DRAFT; R1-1912535, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. e-Meeting; 20191118 - 20191122 9 November 2019 (2019-11-09) discusses enhancements to uplink (UL) transmission timing for Non-Terrestrial Networks (NTN). The document explores the introduction of a timing offset (K_offset) for NR NTN to accommodate uplink HARQ-ACK on PUCCH and PUSCH transmissions. It also considers the impact of varying timing relationships on uplink transmission and the potential need for signaling K_offset values based on either beam-specific or cell-specific configurations.

## SUMMARY

The invention is defined in the appended set of claims.

Embodiments of this application provide a HARQ feedback method and apparatus, and a computer-readable storage medium, to expand an indication range of a HARQ feedback slot interval in a non-terrestrial network (Non-Terrestrial Network, NTN) scenario.

According to a first aspect, this application provides a HARQ feedback method. The method may be applied to a terminal, or may be applied to a module (for example, a chip) in the terminal. The following provides descriptions by using an example in which the method is applied to the terminal. The HARQ method may be used to extend an indication range of a HARQ feedback slot interval, and may include: receiving downlink control information (downlink control information, DCI) from a network device; determining, based on the DCI, a slot interval between a first data block and a HARQ feedback corresponding to the first data block; determining a target slot based on a frame structure; and sending, to the network device in the target slot, HARQ information corresponding to the first data block.

In the solution provided in this application, in a current satellite standard, a maximum quantity of HARQ processes supported by data transmission is already increased to 32. In the current standard, an indication range of K1 is extended from 0 to 15 to 0 to 31. K1 is a slot interval between a slot in which the terminal receives PDSCH data and a HARQ feedback slot corresponding to the slot in which the terminal receives the PDSCH data. In this case, the network device may first determine the slot interval between the first data block and the HARQ feedback corresponding to the first data block, and then send the DCI to the terminal based on the slot interval. After receiving the DCI, the terminal may determine, from a PDSCH-to-HARQ feedback timing indicator (PDSCH-to-HARQ feedback timing indicator) field in the DCI, the slot interval between the first data block and the HARQ feedback corresponding to the first data block, then determine the target slot based on a frame structure currently configured by the network device, and send, to the network device in the target slot, the HARQ information corresponding to the first data block. In a conventional technology, the terminal may directly determine the target slot based on the PDSCH-to-HARQ feedback timing indicator field (without considering the current frame structure). In this embodiment of this application, when determining the target slot, the terminal may first determine, based on the current frame structure, whether a maximum value of a slot interval between any data block and a HARQ corresponding to the data block is greater than or equal to a preset threshold (where for example, the preset threshold is 16). If the maximum value is less than the preset threshold, the terminal may determine the target slot by still using an existing new radio access technology (new radio access technology, NR) protocol. If the maximum value is greater than or equal to the preset threshold, a manner of determining the target slot is different from that in the existing protocol. According to the solution provided in this embodiment of this application, not only the indication range of the HARQ feedback slot interval may be expanded, but also overheads may not be increased, that is, an indication range of the slot interval between the first data block and the HARQ feedback corresponding to the first data block is expanded without increasing the overheads.

In the present invention, the determining a target slot based on a frame structure includes: when the maximum value of the slot interval between the data block and the HARQ corresponding to the data block is greater than or equal to the preset threshold in the frame structure, determining the target slot as

$$\left\lceil \frac{n}{N} + k \right\rceil \times N + x,$$ where k is the slot interval, k is in a unit of a slot group (slot group), a length of the slot group (slot group) is N slots (slots), N is a positive integer greater than or equal to 2, n is a receiving slot of the first data block, and x is any integer in [0, N-1].

In the solution provided in this application, when determining the target slot, the terminal may first determine, based on the current frame structure, whether the maximum value of the slot interval between the data block and the HARQ corresponding to the data block is greater than or equal to the preset threshold. If the maximum value is greater than or equal to the preset threshold, a formula for determining the target slot may be

$$\left\lceil \frac{n}{N} + k \right\rceil \times N + x.$$ k is the slot interval between the first data block and the HARQ feedback corresponding to the first data block, and is in the unit of a slot group (slot group) (different from a unit of a slot (slot) in the conventional technology). The length of the slot group (slot group) may be N slots (slots). n is a slot in which the terminal receives the first data block, and $\frac{n}{N}$ may indicate a group in which the slot in which the first data block is received is located. For example, if the slot n in which the terminal receives the first data block is 6, and the length of the slot group (slot group) is two slots (slots), $\frac{n}{N} = \frac{6}{2} = 3$, indicating that the slot in which the first data block is received is in a third group. A value indicated by the PDSCH-to-HARQ feedback timing indicator field is 10, that is, a HARQ is fed back after an interval of 10 slot groups after the third group. x indicates a slot in which the HARQ is fed back in a group. For example, the terminal needs to feed back the HARQ in a thirteenth group, and the thirteenth group includes two slots. If x is an odd number, the terminal may send the HARQ in a first slot in the thirteenth group; or if x is an even number, the terminal may send the HARQ in a second slot in the thirteenth group. The target slot is determined in this manner, so that the indication range of the HARQ feedback slot interval may be expanded, that is, the indication range of the slot interval between the first data block and the HARQ feedback corresponding to the first data block is expanded.

In a possible implementation, x is determined based on n or a process number of the HARQ corresponding to the first data block.

In the solution provided in this application, x may be determined based on n, for example, x=$n \bmod N$. X may alternatively be determined based on the process number of the HARQ corresponding to the first data block, for example, x=$M \bmod N$, where M is the process number of the HARQ corresponding to the first data block.

In a possible implementation, N = 2.

In the solution provided in this application, the length of the slot group (slot group) may be two slots (slots). It may be understood that any two slots (slots) in the current frame structure may form one slot group (slot group). The two slots may be consecutive slots, or may not be consecutive slots (where there is an interval between the two slots).

In the present invention, the determining a target slot based on a frame structure includes: when the maximum value of the slot interval between the data block and the HARQ corresponding to the data block is less than the preset threshold in the frame structure, determining the target slot as n + $k$, where k is the slot interval, k is in a unit of a slot (slot), and n is a receiving slot of the first data block.

In the solution provided in this application, when determining the target slot, the terminal may first determine, based on the current frame structure, whether the maximum value of the slot interval between the data block and the HARQ corresponding to the data block is greater than or equal to the preset threshold (where for example, the preset threshold is 16). If the maximum value is less than the preset threshold, the terminal may determine the target slot by still using the existing new radio access technology (new radio access technology, NR) protocol, that is, determine the target slot as n + $k$. k is the slot interval between the first data block and the HARQ feedback corresponding to the first data block, k is in a unit of a slot (slot), and n is a slot in which the terminal receives the first data block.

In a possible implementation, a case in which the maximum value of the slot interval between the data block and the HARQ corresponding to the data block is greater than or equal to the preset threshold is determined based on a maximum quantity of HARQ processes or a ratio of a downlink slot to a guard slot to an uplink slot in the frame structure.

In the solution provided in this application, when determining, based on the current frame structure, whether the maximum value of the slot interval between the data block and the HARQ corresponding to the data block is greater than or equal to the preset threshold, the terminal may perform determining based on the maximum quantity of HARQ processes, for example, determine whether a current maximum quantity of HARQ processes exceeds 16, and if the current maximum quantity of HARQ processes exceeds 16, determine whether the maximum value of the slot interval between the data block and the HARQ corresponding to the data block is greater than or equal to the preset threshold; or may perform determining based on the ratio of the downlink slot to the guard slot to the uplink slot in the current frame structure, for example, if a quantity of downlink slots:a quantity of guard slots:a quantity of uplink slots is 27:4:9, may determine whether the maximum value of the slot interval between the data block and the HARQ corresponding to the data block is greater than or equal to the preset threshold.

In a possible implementation, the preset threshold is 16.

In the solution provided in this application, in the existing NR protocol, the slot interval between the first data block and the HARQ feedback corresponding to the first data block falls within a range of 1 to 16 (binarily represented as 000 to 111), and the preset threshold may be preset to 16. In a possible communication system, the preset threshold may alternatively be another value.

According to a second aspect, this application provides a HARQ feedback method. The method may be applied to a network device, or may be applied to a module (for example, a chip) in the network device. The following provides descriptions by using an example in which the method is applied to the network device. The HARQ feedback method may be used to extend an indication range of a HARQ feedback slot interval, and may include: determining a slot interval between a first data block and a HARQ feedback corresponding to the first data block; sending downlink control information DCI to a terminal; determining a target slot based on a frame structure; and receiving, from the terminal in the target slot, HARQ information corresponding to the first data block.

In the solution provided in this application, in a current satellite standard, a maximum quantity of HARQ processes supported by data transmission is already increased to 32. In the current standard, an indication range of K1 is extended from 0 to 15 to 0 to 31. K1 is a slot interval between a slot in which the terminal receives PDSCH data and a HARQ feedback slot corresponding to the slot in which the terminal receives the PDSCH data. In this case, the network device may first determine the slot interval between the first data block and the HARQ feedback corresponding to the first data block, and then send the DCI to the terminal based on the slot interval. After receiving the DCI, the terminal may determine, from a PDSCH-to-HARQ feedback timing indicator (PDSCH-to-HARQ feedback timing indicator) field in the DCI, the slot interval between the first data block and the HARQ feedback corresponding to the first data block, then determine the target slot based on a frame structure currently configured by the network device, and send, to the network device in the target slot, the HARQ information corresponding to the first data block. In a conventional technology, the terminal may directly determine the target slot based on the PDSCH-to-HARQ feedback timing indicator field (without considering the current frame structure). In this embodiment of this application, when determining the target slot, the terminal may first determine, based on the current frame structure, whether a maximum value of a slot interval between any data block and a HARQ corresponding to the data block is greater than or equal to a preset threshold (where for example, the preset threshold is 16). If the maximum value is less than the preset threshold, the terminal may determine the target slot by still using an existing new radio access technology (new radio access technology, NR) protocol. If the maximum value is greater than or equal to the preset threshold, a manner of determining the target slot is different from that in the existing protocol. According to the solution provided in this embodiment of this application, not only the indication range of the HARQ feedback slot interval may be expanded, but also overheads may not be increased, that is, an indication range of the slot interval between the first data block and the HARQ feedback corresponding to the first data block is expanded without increasing the overheads.

It should be understood that the second aspect is performed by the network device, and specific content of the second aspect corresponds to the content of the first aspect. For corresponding features of the second aspect and beneficial effects achieved by the second aspect, refer to the descriptions of the first aspect. To avoid repetition, detailed descriptions are appropriately omitted herein.

In the present invention, the determining a target slot based on a frame structure includes:
when the maximum value of the slot interval between the data block and the HARQ corresponding to the data block is greater than or equal to the preset threshold in the frame structure, determining the target slot as

$$\left[\frac{n}{N} + k\right] \times N + x \, ,$$

where k is the slot interval, k is in a unit of a slot group (slot group), a length of the slot group (slot group) is N slots (slots), N is a positive integer greater than or equal to 2, n is a receiving slot of the first data block, and x is any integer in [0, N-1].

In a possible implementation, x is determined based on n or a process number of the HARQ corresponding to the first data block.

In a possible implementation, N = 2.

In the present invention, the determining a target slot based on a frame structure includes:
when the maximum value of the slot interval between the data block and the HARQ corresponding to the data block is less than the preset threshold in the frame structure, determining the target slot as n + k, where k is the slot interval, k is in a unit of a slot (slot), and n is a receiving slot of the first data block.

In a possible implementation, a case in which the maximum value of the slot interval between the data block and the HARQ corresponding to the data block is greater than or equal to the preset threshold is determined based on the maximum quantity of HARQ processes or a ratio of a downlink slot to a guard slot to an uplink slot in the frame structure.

In a possible implementation, the preset threshold is 16.

According to a third aspect, this application provides a HARQ feedback apparatus. The HARQ feedback apparatus may be a terminal, or may be a module (for example, a chip) in the terminal. The HARQ feedback apparatus may include:

a receiving unit, configured to receive downlink control information DCI from a network device;
a determining unit, configured to determine, based on the DCI, a slot interval between a first data block and a HARQ feedback corresponding to the first data block, where
the determining unit is further configured to determine a target slot based on a frame structure; and
a sending unit, configured to send, to the network device in the target slot, HARQ information corresponding to the first data block.

In a possible implementation, when determining the target slot based on the frame structure, the determining unit is specifically configured to:
when a maximum value of a slot interval between any data block and a HARQ corresponding to the data block is greater than or equal to a preset threshold in the frame structure, determine the target slot as

$$\left[\frac{n}{N} + k\right] \times N + x \, ,$$

where k is the slot interval, k is in a unit of a slot group (slot group), a length of the slot group (slot group) is N slots (slots), N is a positive integer greater than or equal to 2, n is a receiving slot of the first data block, and x is any integer in [0, N-1].

In a possible implementation, x is determined based on n or a process number of the HARQ corresponding to the first data block.

In a possible implementation, N = 2.

In a possible implementation, when determining the target slot based on the frame structure, the determining unit is specifically configured to:
when a maximum value of a slot interval between any data block and a HARQ corresponding to the data block is less than a preset threshold in the frame structure, determine the target slot as n + k, where k is the slot interval, k is in a unit of a slot (slot), and n is a receiving slot of the first data block.

In a possible implementation, a case in which the maximum value of the slot interval between the data block and the HARQ corresponding to the data block is greater than or equal to the preset threshold is determined based on a maximum quantity of HARQ processes or a ratio of a downlink slot to a guard slot to an uplink slot in the frame structure.

In a possible implementation, the preset threshold is 16.

According to a fourth aspect, this application provides a HARQ feedback apparatus. The HARQ feedback apparatus may be a network device, or may be a module (for example, a chip) in the network device. The HARQ feedback apparatus may include:

a determining unit, configured to determine a slot interval between a first data block and a HARQ feedback corresponding to the first data block;
a sending unit, configured to send downlink control information DCI to a terminal, where
the determining unit is further configured to determine a target slot based on a frame structure; and
a receiving unit, configured to receive, from the terminal in the target slot, HARQ information corresponding to the first data block.

In a possible implementation, when determining the target slot based on the frame structure, the determining unit is specifically configured to:
when a maximum value of a slot interval between any data block and a HARQ corresponding to the data block is greater than or equal to a preset threshold in the frame structure, determine the target slot as

$$\left[\frac{n}{N} + k\right] \times N + x$$, where k is the slot interval, k is in a unit of a slot group (slot group), a length of the slot group (slot group) is N slots (slots), N is a positive integer greater than or equal to 2, n is a receiving slot of the first data block, and x is any integer in [0, N-1].

In a possible implementation, x is determined based on n or a process number of the HARQ corresponding to the first data block.

In a possible implementation, N = 2.

In a possible implementation, when determining the target slot based on the frame structure, the determining unit is specifically configured to:
when a maximum value of a slot interval between any data block and a HARQ corresponding to the data block is less than a preset threshold in the frame structure, determine the target slot as n + k, where k is the slot interval, k is in a unit of a slot (slot), and n is a receiving slot of the first data block.

In a possible implementation, a case in which the maximum value of the slot interval between the data block and the HARQ corresponding to the data block is greater than or equal to the preset threshold is determined based on a maximum quantity of HARQ processes or a ratio of a downlink slot to a guard slot to an uplink slot in the frame structure.

In a possible implementation, the preset threshold is 16.

According to a fifth aspect, this application provides a HARQ feedback apparatus. The HARQ feedback apparatus may be a terminal, or may be a module (for example, a chip) in the terminal. The HARQ feedback apparatus may include a processor, a memory, an input interface, and an output interface.

The input interface is configured to receive information from a communication apparatus other than the HARQ feedback apparatus, the output interface is configured to output information to the communication apparatus other than the HARQ feedback apparatus, the memory stores a computer program, and the processor invokes the computer program stored in the memory to perform the following operations:

receiving DCI from a network device;
determining, based on the DCI, a slot interval between a first data block and a HARQ feedback corresponding to the first data block;
determining a target slot based on a frame structure; and
sending, to the network device in the target slot, HARQ information corresponding to the first data block.

In a possible implementation, the determining, by the processor, a target slot based on a frame structure includes:
when a maximum value of a slot interval between any data block and a HARQ corresponding to the data block is greater than or equal to a preset threshold in the frame structure, determining the target slot as

$$\left[\frac{n}{N} + k\right] \times N + x$$, where k is the slot interval, k is in a unit of a slot group (slot group), a length of the slot group (slot group) is N slots (slots), N is a positive integer greater than or equal to 2, n is a receiving slot of the first data block, and x is any integer in [0, N-1].

In a possible implementation, x is determined based on n or a process number of the HARQ corresponding to the first data block.

In a possible implementation, N = 2.

In a possible implementation, the determining, by the processor, a target slot based on a frame structure includes:
when the maximum value of the slot interval between the data block and the HARQ corresponding to the data block is less than the preset threshold in the frame structure, determining the target slot as n + k, where k is the slot interval, k is in a unit of a slot group (slot group), and n is the receiving slot of the first data block.

In a possible implementation, a case in which the maximum value of the slot interval between the data block and the HARQ corresponding to the data block is greater than or equal to the preset threshold is determined based on a maximum quantity of HARQ processes or a ratio of a downlink slot to a guard slot to an uplink slot in the frame structure.

In a possible implementation, the preset threshold is 16.

According to a sixth aspect, this application provides a HARQ feedback apparatus. The HARQ feedback apparatus may be a network device, or may be a module (for example, a chip) in the network device. The HARQ feedback apparatus may include a processor, a memory, an input interface, and an output interface.

The input interface is configured to receive information from a communication apparatus other than the HARQ feedback apparatus, the output interface is configured to output information to the communication apparatus other than the HARQ feedback apparatus, the memory stores a computer program, and the processor invokes the computer program stored in the memory to perform the following operations:

> determining a slot interval between a first data block and a HARQ feedback corresponding to the first data block;
> sending downlink control information DCI to a terminal;
> determining a target slot based on a frame structure; and
> receiving, from the terminal in the target slot, HARQ information corresponding to the first data block.

In a possible implementation, the determining, by the processor, a target slot based on a frame structure includes:

when a maximum value of a slot interval between any data block and a HARQ corresponding to the data block is greater than or equal to a preset threshold in the frame structure, determining the target slot as $\left\lceil \dfrac{n}{N} + k \right\rceil \times N + x$, where k is the slot interval, k is in a unit of a slot group (slot group), a length of the slot group (slot group) is N slots (slots), N is a positive integer greater than or equal to 2, n is a receiving slot of the first data block, and x is any integer in [0, N-1].

In a possible implementation, x is determined based on n or a process number of the HARQ corresponding to the first data block.

In a possible implementation, N = 2.

In a possible implementation, the determining, by the processor, a target slot based on a frame structure includes:

when the maximum value of the slot interval between the data block and the HARQ corresponding to the data block is less than the preset threshold in the frame structure, determining the target slot as n + k, where k is the slot interval, k is in a unit of a slot (slot), and n is the receiving slot of the first data block.

In a possible implementation, a case in which the maximum value of the slot interval between the data block and the HARQ corresponding to the data block is greater than or equal to the preset threshold is determined based on a maximum quantity of HARQ processes or a ratio of a downlink slot to a guard slot to an uplink slot in the frame structure.

In a possible implementation, the preset threshold is 16.

According to a seventh aspect, this application provides a HARQ feedback system. The communication system includes the HARQ feedback apparatus according to the fifth aspect and the HARQ feedback apparatus according to the sixth aspect.

According to an eighth aspect, this application provides a computer-readable storage medium. The computer-readable storage medium stores a computer program or computer instructions. When the computer program or the computer instructions is/are run, some or all of the steps of the HARQ feedback method according to any one of the first aspect and the possible implementations of the first aspect and any one of the second aspect and the possible implementations of the second aspect are performed.

According to a ninth aspect, this application provides a computer program product including executable instructions. When the computer program product runs on user equipment, some or all of the steps of the HARQ feedback method according to any one of the first aspect and the possible implementations of the first aspect and any one of the second aspect and the possible implementations of the second aspect are performed.

According to a tenth aspect, this application provides a chip. The chip includes at least one processor, a memory, and an interface circuit. The memory, the interface circuit, and the at least one processor are interconnected through a line, the at least one memory stores instructions, and when the instructions are executed by the processor, the chip is enabled to perform the HARQ feedback method according to any one of the first aspect and the possible implementations of the first aspect and any one of the second aspect and the possible implementations of the second aspect. The chip may further include another discrete component.

According to an eleventh aspect, this application provides a HARQ feedback apparatus. The HARQ feedback apparatus may include an input interface, a logic circuit, and an output interface. The input interface is connected to the output interface through the logic circuit. The input interface is configured to receive information from another communication apparatus, and the output interface is configured to output, schedule, or send information to the another communication apparatus. The logic circuit is configured to perform an operation other than operations performed by the input interface and the output interface. The HARQ feedback apparatus may be the foregoing terminal or the module (for example, the chip) in the terminal, or may be the foregoing network device or the module (for example, the chip) in the network device.

## BRIEF DESCRIPTION OF DRAWINGS

To describe the technical solutions in embodiments of this application more clearly, the following briefly describes the accompanying drawings for describing embodiments.

FIG. 1 is a schematic diagram of an application scenario according to an embodiment of this application;

FIG. 2 shows a timing relationship of data transmission according to an embodiment of this application;

FIG. 3 is a schematic diagram of scheduling a downlink slot in a TDD scenario according to an embodiment of this application;

FIG. 4 is a schematic diagram of a network architecture according to an embodiment of this application;

FIG. 5 is a schematic flowchart of a HARQ feedback method according to an embodiment of this application;

FIG. 6 is a schematic diagram of a structure of a HARQ feedback apparatus according to an embodiment of this application;

FIG. 7 is a schematic diagram of a structure of another HARQ feedback apparatus according to an embodiment of this application;

FIG. 8 is a schematic diagram of a structure of still another HARQ feedback apparatus according to an embodiment of this application; and

FIG. 9 is a schematic diagram of a structure of still another HARQ feedback apparatus according to an embodiment of this application.

## DESCRIPTION OF EMBODIMENTS

The following describes embodiments of this application in detail with reference to the accompanying drawings in embodiments of this application.

Terms used in embodiments of this application are only used to explain specific embodiments of this application, but are not intended to limit this application.

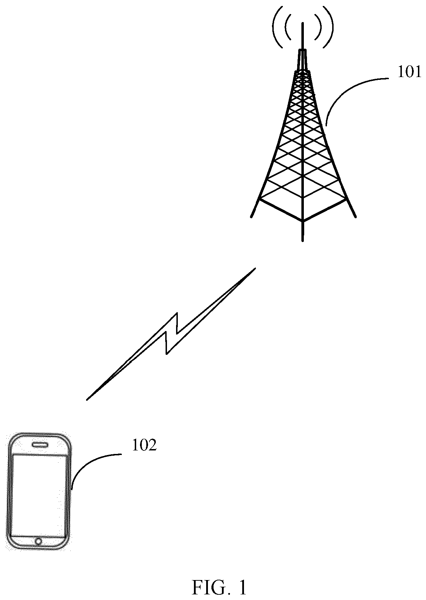

Embodiments of this application may be applied to a communication system of satellite communication. FIG. 1 is a schematic diagram of an application scenario according to an embodiment of this application. As shown in FIG. 1, the application scenario mainly includes a network device 101 and a terminal 102.

The network device 101 may be a network side device, for example, an access point (access point, AP) of a wireless local area network (wireless local area network, WLAN), an evolved NodeB (evolved NodeB, eNB or eNodeB) in 4G, a new radio access technology (new radio access technology, NR) next generation NodeB (next generation NodeB, gNB) in 5G, a base station for next generation communication, a small cell, a micro base station, a relay station, a transmission and reception point (transmission and reception point, TRP), or a road side unit (road side unit, RSU). In embodiments of this application, base stations in communication systems of different communication standards are different. For differentiation, a base station in a 4G communication system is referred to as a long term evolution (long term evolution, LTE) eNB, a base station in a 5G communication system is referred to as an NR gNB, and a base station that supports both the 4G communication system and the 5G communication system is referred to as an evolved long term evolution (evolved long term evolution, eLTE) eNB. These names are only for ease of differentiation, but are not intended to impose a limitation. A satellite network device in embodiments of this application may be configured to communicate with one or more user equipments, or may be configured to communicate with one or more base stations that have some terminal functions (for example, communication between a macro base station and a micro base station, such as an access point). A base station may be an evolved NodeB (evolved NodeB, eNB) in an LTE system, a next generation NodeB (gNB) in a 5G system or an NR system, or another satellite base station and a satellite relay node. In addition, the base station may alternatively be an access point (access point, AP), a transport point (transport point, TRP), a central unit (central unit, CU), or another network entity, and may include some or all of functions of the foregoing network entities.

The terminal 102, also referred to as user equipment (user equipment, UE), is a device that provides voice and/or data connectivity for a user. The user equipment in embodiments of this application may be a terminal device, an access terminal, a subscriber unit, a subscriber station, a mobile station, a remote station, a remote terminal, a mobile device, a user terminal, a terminal, a wireless communication device, a user agent, or a user apparatus. Alternatively, the user equipment may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or a processing device connected to a wireless modem, a vehicle-mounted device, a wearable device (for example, a smart watch, a smart band, or a pedometer), a terminal device in a 5G network, or a terminal device in an evolved public land mobile network (public land mobile network, PLMN).

It should be noted that, a quantity and types of terminals 102 included in the application scenario shown in FIG. 1 are merely examples, and embodiments of this application are not limited thereto. For example, more terminals 102 that communicate with the network device 101 may be further included. For brevity, details are not described in the accompanying drawings. In addition, in the application scenario shown in FIG. 1, although the network device 101 and the terminal 102 are shown, the application scenario may include but is not limited to the network device 101 and the terminal 102. For example, the application scenario may further include a core network node or a device used to carry a virtualized network function. This is clear for persons skilled in the art, and details are not described herein.

In addition, the technical solutions provided in embodiments of this application may be applied to various communication systems, for example, a satellite communication system and a system in which satellite communication and a cellular network are converged. A cellular network system may include a long term evolution (long term evolution, LTE) system, a 5th generation (5th generation, 5G) mobile communication system, a new radio (new radio, NR) system, a machine-to-machine (machine-to-machine, M2M) system, or another evolved communication system. The satellite communication system may include various non-terrestrial network systems, which are not listed one by one herein.

With development of information technologies, communication is urgently required to be efficient, mobile, and diverse. Currently, satellites play an irreplaceable role in some important fields such as spatial communication, aeronautical communication, maritime communication, and military communication. Satellite communication has features such as a long communication distance, a large coverage area, and flexible networking, and can provide services for both fixed terminals and various mobile terminals. A conventional terrestrial network cannot provide seamless coverage for UE, especially in places in which a base station cannot be deployed, such as seas, deserts, and the air. Therefore, a non-terrestrial network is introduced into a 5G system. In the non-terrestrial network, a base station or some base station functions is/are deployed on a high-altitude platform or a satellite, to provide seamless coverage for the UE, and the high-altitude platform or the satellite is less affected by natural disasters, so that reliability of the 5G system can be improved.

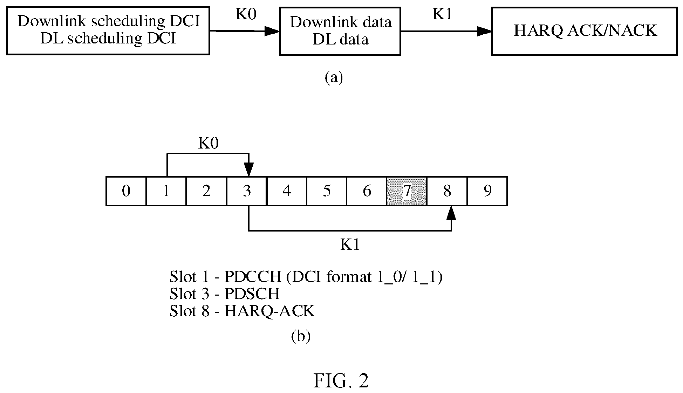

In an existing communication system, a HARQ is often used to ensure data transmission reliability. Specifically, FIG. 2 shows a timing relationship of data transmission according to an embodiment of this application. As shown in (a) in FIG. 2, K0 is a slot interval between downlink scheduling DCI and PDSCH data scheduled by the downlink scheduling DCI, and K1 is a slot interval between a PDSCH and a HARQ feedback of the PDSCH. When a network device communicates with a terminal, after receiving PDSCH data sent by the network device, the terminal needs to send a hybrid automatic repeat request-acknowledgement (hybrid automatic repeat request-acknowledgement, HARQ-ACK) instruction or a hybrid automatic repeat request-negative acknowledgement (hybrid automatic repeat request-negative acknowledgement, HARQ-NACK) instruction to feed back whether decoding succeeds. If UE receives the PDSCH data in a downlink data slot (slot) n, the UE needs to feed back HARQ-ACK/NACK information in a slot n+K1. K1 is indicated by using a PDSCH-to-HARQ timing indicator in DCI. If the DCI does not have the timing indicator, K1 is indicated by using a higher layer parameter DI-Data-ToUL-ACK. For example, as shown in (b) in FIG. 2, K0=2, K1=5, and the network device schedules the DCI in a slot 1, and delivers the PDSCH data in a slot 3. In this case, the terminal receives the PDSCH data from the network device in the slot 3, and sends the HARQ-ACK/NACK information to the network device in a slot 8.

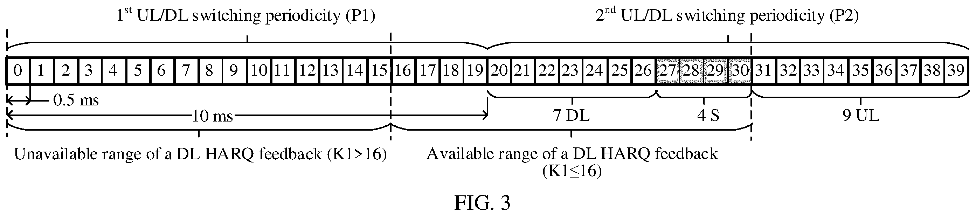

In a current satellite standard, a maximum quantity of HARQ processes supported by data transmission is already increased to 32. However, when a satellite continuously schedules a large quantity of downlink slots for transmission, an indication range of 0 to 15 (1 to 16) of K1 is insufficient to indicate feedback timing corresponding to the PDSCH. For example, FIG. 3 is a schematic diagram of scheduling a downlink slot in a TDD scenario according to an embodiment of this application. As shown in FIG. 3, in a frame structure including 0 to 39 that is configured by a network, 0 to 26 are downlink slots, 27 to 30 are guard slots, and 31 to 39 are uplink slots. A ratio of the uplink slots to the guard slots to the downlink slots is 27:4:9. In this case, because a maximum value of K1 is 15, feedback timing corresponding to a PDSCH in slots 0 to 15 cannot be indicated. An indication range of 0 to 15 of K1 is applicable only to the downlink slots 16 to 26, so that a terminal can send HARQ feedback information to a network device in the slots 31 to 39. For example, the terminal receives, in the slot 0, PDSCH data delivered by the network device, and may feed back a HARQ to the network device after an interval of a maximum of 15 slots. However, the slot 16 is still a downlink slot, and an earliest slot in which the HARQ can be fed back is the slot 31. For this scenario, in a current standard, the indication range of K1 is extended from 0 to 15 to 0 to 31. However, how to indicate K1 after the value range is expanded is an urgent problem to be resolved.

Therefore, a technical problem to be resolved in embodiments of this application may include: expanding an indication range of a HARQ feedback slot interval without increasing overheads.

Based on the foregoing descriptions, to better understand a HARQ feedback method and apparatus, and a computer-readable storage medium that are provided in this application, the following first describes a network architecture to which embodiments of this application are applied.

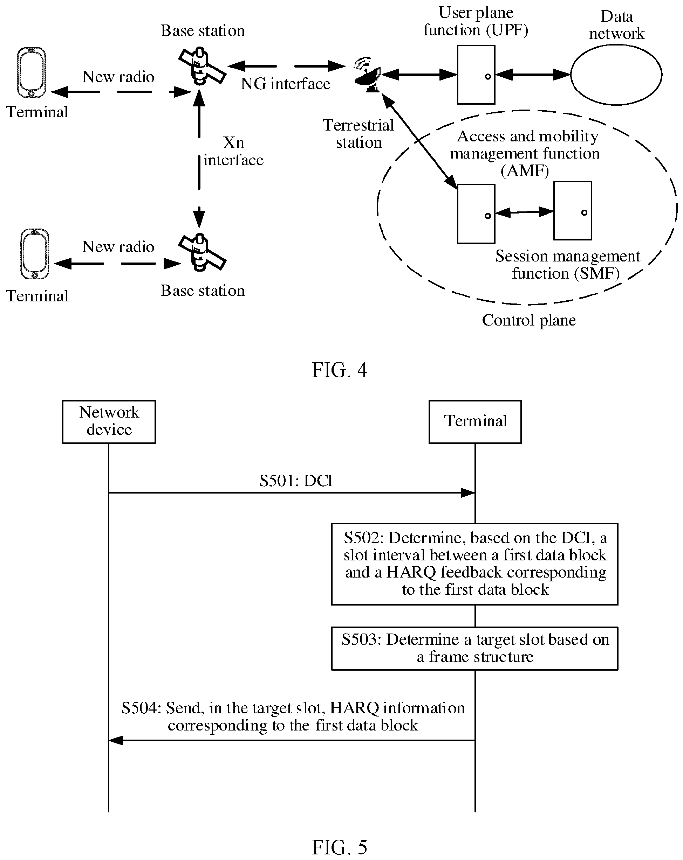

FIG. 4 is a schematic diagram of a network architecture according to an embodiment of this application. As shown in FIG. 4, the network architecture integrates satellite communication and a 5G technology. Network elements in the network architecture include a terminal, a base station, a terrestrial station, and a core network. A terrestrial terminal accesses a network through new radio, and the base station is deployed on a satellite and is connected to a terrestrial core network through a wireless link. In addition, there are wireless links between satellites to implement signaling interworking and user data transmission between base stations.

The network elements and interfaces between the network elements in FIG. 4 are described as follows:

The terminal is a device that supports the new radio, including a mobile device and a non-mobile device. Typical mobile devices include a mobile phone, a wearable, or the like. The terminal may access a satellite network through an air interface, and initiate a service such as a calling service and an Internet access service.

The base station mainly provides a radio access service, schedules a radio resource for an access terminal, and provides a reliable wireless transport protocol, a data encryption protocol, and the like.

The core network provides services such as user connection access control, mobility management, session management, user security authentication, and charging. The core network includes a plurality of functional units, which can be classified into a control-plane functional entity and a data-plane functional entity. An access and mobility management function (access and mobility management function, AMF) is responsible for user access management, security authentication, and mobility management. A user plane function (user plane function, UPF) is responsible for functions such as user plane data transmission management, traffic statistics collection, and security eavesdropping.

The terrestrial station is responsible for forwarding signaling and service data between a satellite base station and the core network.

The new radio refers to a wireless link between the terminal and the base station.

An Xn interface is an interface between base stations, and is mainly used for signaling interworking such as handover.

An NG interface is an interface between the base station and the core network, and is mainly used for interworking non-access stratum (non-access stratum, NAS) signaling and the like of the core network and service data of a user.

This application may be applied to an NTN scenario. The term "NTN" refers to a network or a network segment in which a radio frequency (radio frequency, RF) resource on a satellite or an unmanned aircraft system (unmanned aircraft system, UAS) platform is used. Typical scenarios in which the NTN provides access of UE involve: an NTN transparent payload (using the satellite or the UAS platform as a relay) or an NTN regeneration effective payload (with a base station (for example, a gNB) installed on the satellite or the UAS platform).

In addition, it should be noted that the HARQ feedback method and apparatus, and the computer-readable storage medium provided in embodiments of this application are applicable to both a satellite communication system and various types of communication systems described above, for example, the 5G communication system.

With reference to the foregoing network architecture, the following describes the HARQ feedback method provided in embodiments of this application.

FIG. 5 is a schematic flowchart of a HARQ feedback method according to an embodiment of this application. As shown in FIG. 5, network elements related to the HARQ feedback method include a network device and a terminal. The network device may be the foregoing satellite base station. Specifically, the method may include step S501 to step S504.

Step S501: The terminal receives DCI from the network device.

Correspondingly, the network device sends the DCI to the terminal.

The DCI is carried by a physical downlink control channel (physical downlink control channel, PDCCH), and the downlink control information sent by the network device to the terminal may include information such as uplink and downlink resource allocation, HARQ information, and power control. A PDSCH-to-HARQ feedback timing indicator field in the DCI may indicate time in which the HARQ information needs to be sent after data sending on a PDSCH is completed. For DCI format 1_0, a PDSCH-to-HARQ timing indicator is fixed to 3 bits, and a value is {1, 2, 3, 4, 5, 6, 7, 8}. For DCI format 1_1, a PDSCH-to-HARQ feedback may be 0 bits, 1 bit, 2 bits, or 3 bits, and a bit width is defined by $[\log 2(I)]$. I is determined by a quantity of rows of a higher layer parameter DI-DataToUL-ACK. A HARQ process number (HARQ process number) in the DCI is indicated by 5 bits. In a satellite standard, each uplink carrier and each downlink carrier support a maximum of 32 HARQ processes, so that 5 bits may be used for indication.

Step S502: The terminal determines, based on the DCI, a slot interval between a first data block and a HARQ feedback corresponding to the first data block.

After receiving the DCI from the network device, the terminal may determine, based on the DCI, the slot interval between the first data block and the HARQ feedback corresponding to the first data block. Specifically, a slot in which the terminal receives PDSCH data is a slot for carrying the first data block n, and the slot interval between the first data block and the HARQ feedback corresponding to the first data block is determined based on the PDSCH-to-HARQ feedback timing indicator field in the DCI. n is mapped to {1, 2, 3, 4, 5, 6, 7, 8} in the indicator for format 1_0, and n is mapped, based on a table (table 9.2.3-1 in an NR protocol) preconfigured by the network device, to a value defined by DI-DataToUL-ACK for format 1_1 by the indicator.

Step S503: The terminal determines a target slot based on a frame structure.

After determining, based on the DCI, the slot interval between the first data block and the HARQ feedback corresponding to the first data block, the terminal may determine the target slot based on a current frame structure.

The terminal may first determine, based on the current frame structure, whether a maximum value of a slot interval between any data block and a HARQ corresponding to the data block is greater than or equal to a preset threshold. For example, the preset threshold is 16. Details are as follows:

In a possible implementation, the terminal may perform determining based on a maximum quantity of HARQ processes. For example, the terminal determines whether a current maximum quantity of HARQ processes exceeds 16. If the current maximum quantity of HARQ processes exceeds 16, the terminal determines whether the maximum value of the slot interval between the data block and the HARQ corresponding to the data block is greater than or equal to the preset threshold.

In another possible implementation, the terminal may perform determining based on a ratio of a downlink slot to a guard slot to an uplink slot in the current frame structure. For example, in the frame structure shown in FIG. 3, if a quantity of downlink slots:a quantity of guard slots:a quantity of uplink slots is 27:4:9, the terminal may determine whether the maximum value of the slot interval between the data block and the HARQ corresponding to the data block is greater than or equal to the preset threshold. For another example, in a possible frame structure, if a quantity of downlink slots:a quantity of guard slots:a quantity of uplink slots is 14:2:5, the terminal may also determine whether the maximum value of the slot interval between the data block and the HARQ corresponding to the data block is greater than or equal to the preset threshold.

In a conventional technology, the terminal may directly determine the target slot based on the PDSCH-to-HARQ feedback timing indicator field (without considering the current frame structure). In this embodiment of this application, the terminal needs to determine the target slot based on the current frame structure, which is different from that in an existing protocol.

It may be understood that whether the maximum value of the slot interval between the data block and the HARQ corresponding to the data block is greater than or equal to (or greater than) the preset threshold, and whether a determining condition includes the preset threshold do not affect the essence of the solution of this application. This is uniformly described herein, and details are not described subsequently.

Case 1: The maximum value of the slot interval between the data block and the HARQ corresponding to the data block is greater than or equal to the preset threshold.

When the maximum value of the slot interval between the data block and the HARQ corresponding to the data block is greater than or equal to the preset threshold in the current frame structure, the target slot is determined as $\left\lceil \frac{n}{N} + k \right\rceil \times N + x$. k is the slot interval, k is in a unit of a slot group (slot group), a length of the slot group (slot group) is N slots (slots), N is a positive integer greater than or equal to 2, n is a receiving slot of the first data block, and x is any integer in [0, N-1].

In the 27 downlink slots in the frame structure shown in FIG. 3, a latest slot in which uplink HARQ feedback information can be sent is the slot 39. A maximum value of a slot interval between a data block in the slot 0 and a HARQ corresponding to the data block is 39, a maximum value of a slot interval between a data block in the slot 1 and a HARQ corresponding to the data block is 38, ..., a maximum value of a slot interval between a data block in the slot 15 and a HARQ corresponding to the data block is 25, a maximum value of a slot interval between a data block in the slot 16 and a HARQ corresponding to the data block is 24, ..., and a maximum value of a slot interval between a data block in the slot 26 and a HARQ corresponding to the data block is 13. When the maximum value of the slot interval between the data block and the HARQ corresponding to the data block is greater than or equal to the preset threshold, the target slot may be determined in a new determining manner, that is, the target slot is determined as $\left\lceil \frac{n}{N} + k \right\rceil \times N + x$.

In an embodiment, the preset threshold is 16.

A length of one slot group (slot group) may be N slots (slots), and the N slots in the slot group may be consecutive slots, or may not be consecutive slots (where there is an interval between the N slots). For example, N = 2, and the length of one slot group (slot group) is two slots (slots). Any two slots (slots) in the current frame structure may form one slot group (slot group). The two slots may be consecutive slots, or may not be consecutive slots (where there is an interval between the two slots). For example, in the frame structure shown in FIG. 3, the slot 0 and the slot 1 may form one slot group, the slot 0 and a slot 3 may form one slot group, or the slot 0 and a slot 30 may form one slot group. An interval between two slots in one slot group is not limited. It may be understood that when N is another value, a slot composition manner in the slot group is the same as that in the example in which N = 2. Details are not described again.

It may be understood that k is the slot interval between the first data block and the HARQ feedback corresponding to the first data block, and is in the unit of a slot group (slot group) (different from a unit of a slot (slot) in the conventional technology). The length of the slot group (slot group) may be N slots (slots). n is a slot in which the terminal receives the first data block, and $\frac{n}{N}$ may indicate a group in which the slot in which the first data block is received. For example, if the slot n in which the terminal receives the first data block is 6, and the length of the slot group (slot group) is two slots (slots), $\frac{n}{N} = \frac{6}{2} = 3$, indicating that the slot in which the first data block is received is in a third group. A value indicated by the PDSCH-to-HARQ feedback timing indicator field is 10, that is, a HARQ is fed back after an interval of 10 slot groups after the third group.

x indicates a slot in which the terminal sends and feeds back the HARQ information in the group $\frac{n}{N}$. x may be determined based on n or a process number of the HARQ corresponding to the first data block.

In a possible implementation, x is determined based on n. For example, *x=n mod N*. If x is an odd number, the terminal may send the HARQ feedback information in a first slot in the group $\frac{n}{N}$; or if x is an even number, the terminal may send the HARQ feedback information in a second slot in the group $\frac{n}{N}$. For example, the terminal needs to feed back the HARQ information in a thirteenth slot group, and N = 2, that is, the thirteenth slot group includes two slots. If x is an odd number, the terminal may send the HARQ information in a first slot in the thirteenth group; or if x is an even number, the terminal may send the HARQ information in a second slot in the thirteenth group. For another example, the terminal needs to feed back the HARQ information in the thirteenth group slot group, and N=3, that is, the thirteenth slot group includes three slots. If x is an odd number, the terminal may send the HARQ information in the first slot or a third slot in the thirteenth group; or if x is an even number, the terminal may send the HARQ information in the second slot in the thirteenth group. For another example, the terminal needs to feed back the HARQ information in the thirteenth slot group, and N=4, that is, the thirteenth group slot group includes four slots. If x is an odd number, the terminal may send the HARQ information in the first slot or the third slot in the thirteenth group; or if x is an even number, the terminal may send the HARQ information in the second slot or a fourth slot in the thirteenth group.

In a possible implementation, x is determined based on the process number of the HARQ corresponding to the first data block. For example, x=M mod N, where M is the process number of the HARQ corresponding to the first data block.

Optionally, when the target slot is determined based on $\left[\frac{n}{N} + k\right] \times N + x$, whether the target slot is a guard slot may be first determined. If the target slot is not the guard slot, the HARQ information may be directly sent in the target slot. If the target slot is the guard slot (because data cannot be transmitted in the guard slot), the terminal needs to send the HARQ information in a first uplink slot after the target slot that is determined based on

$$\left[\frac{n}{N} + k\right] \times N + x.$$

Case 2: The maximum value of the slot interval between the data block and the HARQ corresponding to the data block is less than the preset threshold.

When the maximum value of the slot interval between the data block and the HARQ corresponding to the data block is less than the preset threshold in the current frame structure, determine the target slot as n + *k*, where k is the slot interval, k is in a unit of a slot (slot), and n is a receiving slot of the first data block.

Optionally, when the target slot is determined based on n + *k*, whether the target slot is a guard slot may be first determined. If the target slot is not the guard slot, the HARQ information may be directly sent in the target slot. If the target slot is the guard slot (because data cannot be transmitted in the guard slot), the terminal needs to send the HARQ information in a first uplink slot after the target slot that is determined based on n + *k*.

Step S504: The terminal sends, to the network device in the target slot, the HARQ information corresponding to the first data block.

After determining the target slot based on the frame structure, the terminal sends, to the network device in the target slot, the HARQ information corresponding to the first data block. Data sending and receiving support a HARQ technology, so that a data transmission delay can be reduced and a higher data transmission rate can be achieved. In the HARQ technology, the terminal needs to send, to the network device, an acknowledgement (acknowledgement, ACK) message or a negative acknowledgement (negative acknowledgement, NACK) message, that is, the ACK/NACK message, to notify the network device of whether data sent by the network device is correctly received. A feedback of the ACK message indicates that the terminal correctly receives the data sent by the network device, and a feedback of the NACK message indicates that the terminal does not correctly receive the data sent by the network device, or received data is incorrect.

In conclusion, the network device in this embodiment of this application may first determine the slot interval between the first data block and the HARQ feedback corresponding to the first data block, and then send the DCI to the terminal based on the slot interval. After receiving the DCI, the terminal may determine, from the PDSCH-to-HARQ feedback timing indicator (PDSCH-to-HARQ feedback timing indicator) field in the DCI, the slot interval between the first data block and the HARQ feedback corresponding to the first data block, then determine the target slot based on the frame structure currently configured by the network device, and send, to the network device in the target slot, the HARQ information corresponding to the first data block. In the conventional technology, the terminal may directly determine the target slot based on the PDSCH-to-HARQ feedback timing indicator field (without considering the current frame structure). In this embodiment of this application, when determining the target slot, the terminal may first determine, based on the current frame structure, whether the maximum value of the slot interval between the data block and the HARQ corresponding to the data block is greater than or equal to the preset threshold (where for example, the preset threshold is 16). If the maximum value is less than the preset threshold, the terminal may determine the target slot by still using an existing new radio access technology (new radio access technology, NR) protocol. If the maximum value is greater than or equal to the preset threshold, a manner of determining the target slot is different from that in the existing protocol. According to the solution provided in this embodiment of this application, not only an indication range of a HARQ feedback slot interval may be expanded, but also overheads may not be increased, that is, an indication range of the slot interval between the first data block and the HARQ feedback corresponding to the first data block is expanded without increasing the overheads.

With reference to the foregoing network architecture, the following describes another HARQ feedback method provided in an embodiment of this application. Network elements related to the HARQ feedback method include a network device and a terminal. The network device may be the foregoing satellite base station. Specifically, to indicate an extended HARQ feedback slot interval, the network device may increase a quantity of bits in a PDSCH-to-HARQ feedback timing indicator field in DCI, to expand an indication range. For example, the PDSCH-to-HARQ feedback timing indicator field in the current DCI is indicated by using 3 bits. In a current standard, a slot interval between a slot in which the terminal receives PDSCH data and a HARQ feedback slot corresponding to the slot in which the terminal receives the PDSCH data is extended from 0 to 15 to 0 to 31. Therefore, 1 bit may be added to the PDSCH-to-HARQ feedback timing indicator field in the DCI for indication, to expand the indication range. It may be understood that, in a communication system, if the slot interval between the slot in which the terminal receives the PDSCH data and the HARQ feedback slot corresponding to the slot in which the terminal receives the PDSCH data needs to be expanded to a larger range, the quantity of bits in the PDSCH-to-HARQ feedback timing indicator field in the DCI may be correspondingly increased for indication. In this embodiment of this application, a DCI format may be modified, and an implementation is easier.

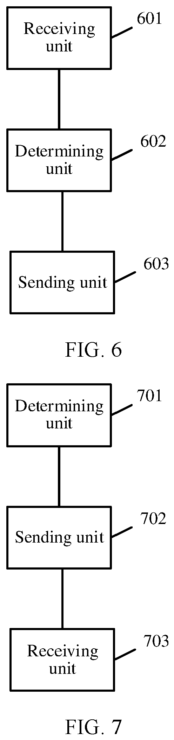

Based on the foregoing network architecture, FIG. 6 is a schematic diagram of a structure of a HARQ feedback apparatus according to an embodiment of this application. The HARQ feedback apparatus may be a terminal, or may be a module (for example, a chip) in the terminal. As shown in FIG. 6, the HARQ feedback apparatus 600 includes at least a receiving unit 601, a determining unit 602, and a sending unit 603.

The receiving unit 601 is configured to receive downlink control information DCI from a network device.

The determining unit 602 is configured to determine, based on the DCI, a slot interval between a first data block and a HARQ feedback corresponding to the first data block.

The determining unit 602 is further configured to determine a target slot based on a frame structure.

The sending unit 603 is configured to send, to the network device in the target slot, HARQ information corresponding to the first data block.

In an embodiment, when determining the target slot based on the frame structure, the determining unit 602 is specifically configured to:
when a maximum value of a slot interval between any data block and a HARQ corresponding to the data block is greater than or equal to a preset threshold in the frame structure, determine the target slot as

$$\left\lceil \frac{n}{N} + k \right\rceil \times N + x \,,$$ where k is the slot interval, k is in a unit of a slot group (slot group), a length of the slot group (slot group) is N slots (slots), N is a positive integer greater than or equal to 2, n is a receiving slot of the first data block, and x is any integer in [0, N-1].

In an embodiment, x is determined based on n or a process number of the HARQ corresponding to the first data block.

In an embodiment, N = 2.

In an embodiment, when determining the target slot based on the frame structure, the determining unit 602 is specifically configured to:
when a maximum value of a slot interval between any data block and a HARQ corresponding to the data block is less than a preset threshold in the frame structure, determine the target slot as n + k, where k is the slot interval, k is in a unit of a slot (slot), and n is a receiving slot of the first data block.

In an embodiment, a case in which the maximum value of the slot interval between the data block and the HARQ corresponding to the data block is greater than or equal to the preset threshold is determined based on a maximum quantity of HARQ processes or a ratio of a downlink slot to a guard slot to an uplink slot in the frame structure.

In an embodiment, the preset threshold is 16.

For more detailed descriptions of the receiving unit 601, the determining unit 602, and the sending unit 603, directly refer to related descriptions of the terminal device in the method embodiment shown in FIG. 5, and details are not described herein again.

Based on the foregoing network architecture, FIG. 7 is a schematic diagram of a structure of another HARQ feedback apparatus according to an embodiment of this application. The HARQ feedback apparatus may be a network device, or may be a module (for example, a chip) in the network device. As shown in FIG. 7, the HARQ feedback apparatus 700 includes at least a determining unit 701, a sending unit 702, and a receiving unit 703.

The determining unit 701 is configured to determine a slot interval between a first data block and a HARQ feedback corresponding to the first data block.

The sending unit 702 is configured to send downlink control information DCI to a terminal.

The determining unit 701 is further configured to determine a target slot based on a frame structure.

The receiving unit 703 is configured to receive, from the terminal in the target slot, HARQ information corresponding to the first data block.

In a possible implementation, when determining the target slot based on the frame structure, the determining unit 701 is specifically configured to:

when a maximum value of a slot interval between any data block and a HARQ corresponding to the data block is greater than or equal to a preset threshold in the frame structure, determine the target slot as

$\left[\dfrac{n}{N} + k\right] \times N + x$, where k is the slot interval, k is in a unit of a slot group (slot group), a length of the slot group (slot group) is N slots (slots), N is a positive integer greater than or equal to 2, n is a receiving slot of the first data block, and x is any integer in [0, N-1].

In a possible implementation, x is determined based on n or a process number of the HARQ corresponding to the first data block.

In a possible implementation, N = 2.

In a possible implementation, when determining the target slot based on the frame structure, the determining unit 701 is specifically configured to:

when a maximum value of a slot interval between any data block and a HARQ corresponding to the data block is less than a preset threshold in the frame structure, determine the target slot as n + $k$, where k is the slot interval, k is in a unit of a slot (slot), and n is a receiving slot of the first data block.

In a possible implementation, a case in which the maximum value of the slot interval between the data block and the HARQ corresponding to the data block is greater than or equal to the preset threshold is determined based on a maximum quantity of HARQ processes or a ratio of a downlink slot to a guard slot to an uplink slot in the frame structure.

In a possible implementation, the preset threshold is 16.

For more detailed descriptions of the determining unit 701, the sending unit 702, and the receiving unit 703, directly refer to related descriptions of the network device in the method embodiment shown in FIG. 5, and details are not described herein again.

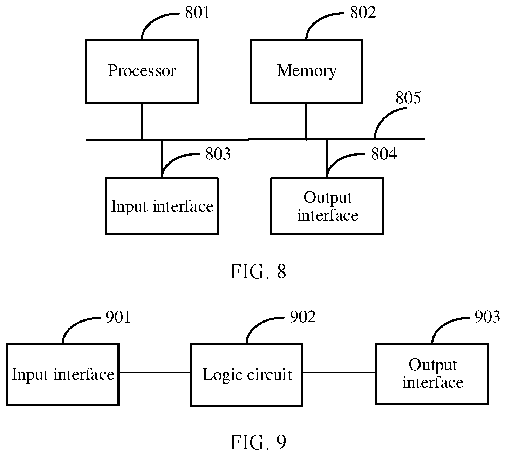

FIG. 8 is a schematic diagram of a structure of still another HARQ feedback apparatus according to an embodiment of this application. As shown in FIG. 8, the HARQ feedback apparatus may include one or more processors 801, one or more memories 802, an input interface 803, an output interface 804, and a bus 805. The processor 801 may be a general-purpose central processing unit (CPU), a plurality of CPUs, a microprocessor, an application-specific integrated circuit (application-specific integrated circuit, ASIC), or one or more integrated circuits configured to control program execution in the solutions of the present invention. The memory 802 may be a read-only memory (read-only memory, ROM) or a type of static storage device capable of storing static information and instructions, a random access memory (random access memory, RAM) or a type of dynamic storage device capable of storing information and instructions, or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital universal optical disc, a Blu-ray optical disc, and the like), a magnetic disk storage medium or another magnetic storage device, or any other medium capable of carrying or storing expected program code in a form of an instruction or a data structure and capable of being accessed by a computer. The memory 802 is not limited thereto. The memory 802 may exist independently and is connected to the processor 801 through the bus 805. The memory 802 may alternatively be integrated with the processor 801. The bus 805 is configured to connect these components.

In an embodiment, the HARQ feedback apparatus may be a terminal or a module (for example, a chip) in the terminal. When computer program instructions stored in the memory 802 are executed, the processor 801 is configured to control the receiving unit 601 and the sending unit 603 to perform operations performed in the foregoing embodiment. The processor 801 is further configured to perform an operation performed by the determining unit 602 in the foregoing embodiment. The input interface 803 is configured to perform an operation performed by the receiving unit 601 in the foregoing embodiment, for example, receiving the DCI from the network device. The output interface 804 is configured to perform an operation performed by the sending unit 603 in the foregoing embodiment, for example, sending, to the network device in the target slot, the HARQ information corresponding to the first data block. The terminal or the module in the terminal may be further configured to perform various methods performed by the terminal in the method embodiment shown in FIG. 5. Details are not described again.

In an embodiment, the HARQ feedback apparatus may be a network device or a module (for example, a chip) in the network device. When computer program instructions stored in the memory 802 are executed, the processor 801 is configured to control the sending unit 702 and the receiving unit 703 to perform the operations performed in the foregoing embodiment. The processor 801 is further configured to perform an operation performed by the determining unit 701 in the foregoing embodiment. The input interface 803 is configured to perform an operation performed by the receiving unit 703 in the foregoing embodiment, for example, receiving the HARQ information corresponding to the first data block from the terminal in the target slot. The output interface 804 is configured to perform an operation performed by the sending unit 702 in the foregoing embodiment, for example, sending the DCI to the terminal. The network device or the module in the network device may be further configured to perform various methods performed by the network device in the method embodiment shown in FIG. 5. Details are not described again.

FIG. 9 is a schematic diagram of a structure of still another HARQ feedback apparatus according to an embodiment of this application. As shown in FIG. 9, the HARQ feedback apparatus may include an input interface 901, a logic circuit 902, and an output interface 903. The input interface 901 is connected to the output interface 903 through the logic circuit 902. The input interface 901 is configured to receive information from another communication apparatus, and the output interface 903 is configured to output, schedule, or send information to the another communication apparatus. The logic circuit 902 is configured to perform an operation other than operations performed by the input interface 901 and the output interface 903, for example, implement a function implemented by the processor 901 in the foregoing embodiment. The HARQ feedback apparatus may be a terminal or a module in the terminal, or may be a network device or a module in the network device. For more detailed descriptions of the input interface 901, the logic circuit 902, and the output interface 903, directly refer to related descriptions of the terminal or the module in the terminal and the network device or the module in the network device in the foregoing method embodiments, and details are not described herein again.

An embodiment of this application further provides a computer-readable storage medium. The computer-readable storage medium stores computer-readable instructions. When the instructions are executed, the method in the foregoing method embodiment is performed.

An embodiment of this application further provides a computer program product including instructions. When the instructions are executed, the method in the foregoing method embodiment is performed.

An embodiment of this application further provides a chip. The chip includes at least one processor, a memory, and an interface circuit. The memory, the interface circuit, and the at least one processor are interconnected through a line, the at least one memory stores instructions, and when the instructions are executed by the processor, the chip is enabled to perform the method in the foregoing method embodiment. The chip may further include a discrete component.

An embodiment of this application further provides a HARQ feedback system. The communication system includes a terminal and a network device. For specific descriptions, refer to the HARQ feedback method shown in FIG. 5.

It may be understood that the memory mentioned in embodiments of this application may be a volatile memory or a nonvolatile memory, or may include both the volatile memory and the nonvolatile memory. The nonvolatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory is any other medium that is capable of carrying or storing expected program code in a form of an instruction or a data structure and that is capable of being accessed by a computer, but is not limited thereto. The memory in embodiments of this application may alternatively be a circuit or any other apparatus that is capable of implementing a storage function, and is configured to store program instructions and/or data.

It should be further understood that the processor in embodiments of this application may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic component, a discrete hardware component, or the like. The general-purpose processor may be a microprocessor, or the processor may be any conventional processor or the like.

It should be noted that when the processor is the general-purpose processor, the DSP, the ASIC, the FPGA or the another programmable logic device, the discrete gate, the transistor logic device, or the discrete hardware component, the memory (a storage module) is integrated into the processor.

It should be noted that the memory described in this specification aims to include but is not limited to these memories and any memory of another appropriate type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

Persons of ordinary skill in the art may be aware that, in combination with the examples described in embodiments provided in this specification, units and algorithm steps can be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The scope of protection is defined by the appended claims.

**Claims**

1. A hybrid automatic repeat request, HARQ, feedback method for a non-terrestrial network, NTN, comprising:

receiving (S502) downlink control information, DCI, from a network device (101);
determining, based on the DCI, a slot interval between a first data block and a HARQ feedback corresponding to the first data block;
determining (S503) a target slot based on a frame structure and the determined slot interval, the frame structure including downlink slots, uplink slots, and guard slots within a frame; and
sending (S504), to the network device in the target slot, HARQ information corresponding to the first data block,
wherein the determining the target slot based on the frame structure comprises:

when a maximum value of the slot interval between any data block and a HARQ corresponding to the data block is greater than or equal to a preset threshold in the frame structure, determining the target slot as

$$\left\lceil \frac{n}{N} + k \right\rceil \times N + x$$

, wherein k is the slot interval, k is in a unit of a slot group, a length of the slot group is N slots, N is a positive integer greater than or equal to 2, n is a receiving slot of the first data block, and x is any integer in [0, N-1],
wherein the determining a target slot based on a frame structure comprises:
when a maximum value of a slot interval between any data block and a HARQ corresponding to the data block is less than a preset threshold in the frame structure, determining the target slot as n + k, wherein k is the slot interval, k is in a unit of a slot, and n is a receiving slot of the first data block.

2. The method according to claim 1, wherein x is determined based on n or a process number of the HARQ corresponding to the first data block.

3. The method according to claim 1 or 2, wherein N = 2.

4. The method according to claim 1 or 2, wherein a case in which the maximum value of the slot interval between the data block and the HARQ corresponding to the data block is greater than or equal to the preset threshold is determined based on a maximum quantity of HARQ processes or a ratio of a downlink slot to a guard slot to an uplink slot in the frame structure.

**5.** The method according to any one of claims 1 to 4, wherein the preset threshold is 16.

**6.** A hybrid automatic repeat request, HARQ, feedback method for a non-terrestrial network, NTN, comprising:

determining a slot interval between a first data block and a HARQ feedback corresponding to the first data block and the determined slot interval, the frame structure including downlink slots, uplink slots, and guard slots within a frame;
sending downlink control information, DCI, to a terminal (102);
determining a target slot based on a frame structure; and
receiving, from the terminal in the target slot, HARQ information corresponding to the first data block,
wherein the determining the target slot based on the frame structure comprises:

when a maximum value of the slot interval between any data block and a HARQ corresponding to the data block is greater than or equal to a preset threshold in the frame structure, determining the target slot as

$$\left[\frac{n}{N} + k\right] \times N + x,$$ wherein k is the slot interval, k is in a unit of a slot group, a length of the slot group is N slots, N is a positive integer greater than or equal to 2, n is a receiving slot of the first data block, and x is any integer in [0, N-1],
wherein the determining a target slot based on a frame structure comprises:
when a maximum value of a slot interval between any data block and a HARQ corresponding to the data block is less than a preset threshold in the frame structure, determining the target slot as n + $k$, wherein k is the slot interval, k is in a unit of a slot, and n is a receiving slot of the first data block.

**7.** The method according to claim 6, wherein x is determined based on n or a process number of the HARQ corresponding to the first data block.

**8.** The method according to claim 6 or 7, wherein N = 2.

**9.** A hybrid automatic repeat request, HARQ, feedback apparatus, comprising a processor, a memory, an input interface, and an output interface, wherein the input interface is configured to receive information from a communication apparatus other than the HARQ feedback apparatus, the output interface is configured to output information to the communication apparatus other than the HARQ feedback apparatus, and the processor invokes a computer program stored in the memory to perform:

the method according to any one of claims 1 to 5; or
the method according to any one of claims 6 to 8.

**10.** A computer-readable storage medium, wherein the computer-readable storage medium stores a computer program or computer instructions, and when the computer program or the computer instructions is/are run, the method according to any one of claims 1 to 5 is performed; or
wherein the computer-readable storage medium stores a computer program or computer instructions, and when the computer program or the computer instructions is/are run the method according to any one of claims 6 to 8 is performed.

**11.** A hybrid automatic repeat request HARQ feedback system, comprising a terminal and a network device, wherein the terminal is configured to perform the method according to any one of claims 1 to 5, and the network device is configured to perform the method according to any one of claims 6 to 8.

**12.** A computer program product,
wherein the computer program product stores a computer program or computer instructions, and when the computer program or the computer instructions is/are run, the method according to any one of claims 1 to 5 is performed; or
wherein the computer program product stores a computer program or computer instructions, and when the computer program or the computer instructions is/are run the method according to any one of claims 6 to 8 is performed.

**Patentansprüche**

**1.** Rückkopplungsverfahren für hybride automatische Wiederholungsaufforderung, HARQ-Rückkopplungsverfahren, für ein nicht-terrestrisches Netzwerk, NTN, umfassend:

Empfangen (S502) von Downlink-Steuerinformationen, DCI, aus einer Netzwerkvorrichtung (101);
Bestimmen, basierend auf den DCI, eines Schlitzintervalls zwischen einem ersten Datenblock und einer HARQ-Rückkopplung entsprechend dem ersten Datenblock;
Bestimmen (S503) eines Zielschlitzes basierend auf einer Rahmenstruktur und dem bestimmten Schlitzintervall, wobei die Rahmenstruktur Downlink-Schlitze, Uplink-Schlitze und Schutzschlitze innerhalb eines Rahmens beinhaltet; und

Senden (S504) von HARQ-Informationen entsprechend dem ersten Datenblock an die Netzwerkvorrichtung in dem Zielschlitz,

wobei das Bestimmen des Zielschlitzes basierend auf der Rahmenstruktur Folgendes umfasst:

wenn ein Maximalwert des Schlitzintervalls zwischen einem beliebigen Datenblock und einer HARQ entsprechend dem Datenblock größer oder gleich einem voreingestellten Schwellenwert in der Rahmenstruktur ist, Bestimmen des Zielschlitzes als

$\left\lceil \frac{n}{N} + k \right\rceil \times N + x$ , wobei k das Schlitzintervall ist, k in einer Einheit einer Schlitzgruppe vorliegt, eine Länge der Schlitzgruppe N Schlitze ist, N eine positive ganze Zahl größer oder gleich 2 ist, n ein Empfangsschlitz des ersten Datenblocks ist und x eine beliebige ganze Zahl in [0, N-1] ist,

wobei das Bestimmen eines Zielschlitzes basierend auf einer Rahmenstruktur Folgendes umfasst:

wenn ein Maximalwert eines Schlitzintervalls zwischen einem beliebigen Datenblock und einer HARQ entsprechend dem Datenblock kleiner als ein voreingestellter Schwellenwert in der Rahmenstruktur ist, Bestimmen des Zielschlitzes als n + *k*, wobei k das Schlitzintervall ist, k in einer Einheit eines Schlitzes vorliegt und n ein Empfangsschlitz des ersten Datenblocks ist.

2. Verfahren nach Anspruch 1, wobei x basierend auf n oder einer Prozessnummer der HARQ entsprechend dem ersten Datenblock bestimmt wird.

3. Verfahren nach Anspruch 1 oder 2, wobei N = 2.

4. Verfahren nach Anspruch 1 oder 2, wobei ein Fall, in welchem der Maximalwert des Schlitzintervalls zwischen dem Datenblock und der HARQ entsprechend dem Datenblock größer oder gleich dem voreingestellten Schwellenwert ist, basierend auf einer maximalen Anzahl von HARQ-Prozessen oder einem Verhältnis eines Downlink-Schlitzes zu einem Schutzschlitz zu einem Uplink-Schlitz in der Rahmenstruktur bestimmt wird.

5. Verfahren nach einem der Ansprüche 1 bis 4, wobei der voreingestellte Schwellenwert 16 ist.

6. Rückkopplungsverfahren für hybride automatische Wiederholungsaufforderung, HARQ-Rückkopplungsverfahren, für ein nicht-terrestrisches Netzwerk, NTN, umfassend:

Bestimmen eines Schlitzintervalls zwischen einem ersten Datenblock und einer HARQ-Rückkopplung entsprechend dem ersten Datenblock und dem bestimmten Schlitzintervall, wobei die Rahmenstruktur Downlink-Schlitze, Uplink-Schlitze und Schutzschlitze innerhalb eines Rahmens beinhaltet;

Senden von Downlink-Steuerinformationen, DCI, an ein Endgerät (102);

Bestimmen eines Zielschlitzes basierend auf einer Rahmenstruktur; und

Empfangen von HARQ-Informationen entsprechend dem ersten Datenblock aus dem Endgerät in dem Zielschlitz,

wobei das Bestimmen des Zielschlitzes basierend auf der Rahmenstruktur Folgendes umfasst:

wenn ein Maximalwert des Schlitzintervalls zwischen einem beliebigen Datenblock und einer HARQ entsprechend dem Datenblock größer oder gleich einem voreingestellten Schwellenwert in der Rahmenstruktur ist, Bestimmen des Zielschlitzes als

$\left\lceil \frac{n}{N} + k \right\rceil \times N + x$ , wobei k das Schlitzintervall ist, k in einer Einheit einer Schlitzgruppe vorliegt, eine Länge der Schlitzgruppe N Schlitze ist, N eine positive ganze Zahl größer oder gleich 2 ist, n ein Empfangsschlitz des ersten Datenblocks ist und x eine beliebige ganze Zahl in [0, N-1] ist,

wobei das Bestimmen eines Zielschlitzes basierend auf einer Rahmenstruktur Folgendes umfasst:

wenn ein Maximalwert eines Schlitzintervalls zwischen einem beliebigen Datenblock und einer HARQ entsprechend dem Datenblock kleiner als ein voreingestellter Schwellenwert in der Rahmenstruktur ist, Bestimmen des Zielschlitzes als n + *k*, wobei k das Schlitzintervall ist, k in einer Einheit eines Schlitzes vorliegt und n ein Empfangsschlitz des ersten Datenblocks ist.

7. Verfahren nach Anspruch 6, wobei x basierend auf n oder einer Prozessnummer der HARQ entsprechend dem ersten Datenblock bestimmt wird.

8. Verfahren nach Anspruch 6 oder 7, wobei N = 2.

9. Rückkopplungsvorrichtung für hybride automatische Wiederholungsaufforderung, HARQ-Rückkopplungsvorrichtung, umfassend einen Prozessor, einen Speicher, eine Eingabeschnittstelle und eine Ausgabeschnittstelle, wobei die Eingabeschnittstelle dazu konfiguriert ist, Informationen von einer Kommunikationsvorrichtung zu empfangen, die sich von der HARQ-Rückkopplungsvorrichtung unterscheidet, die Ausgabeschnittstelle dazu konfiguriert ist, Informationen an die Kommunikationsvorrichtung auszugeben, die sich von der HARQ-Rückkopplungsvorrichtung unterscheidet, und der Prozessor ein Computerprogramm aufruft, das in dem Speicher gespeichert ist, um Folgendes durchzuführen:

das Verfahren nach einem der Ansprüche 1 bis 5; oder

das Verfahren nach einem der Ansprüche 6 bis 8.

10. Computerlesbares Speichermedium, wobei das computerlesbare Speichermedium ein Computerprogramm oder Computeranweisungen speichert und, wenn das Computerprogramm oder die Computeranweisungen ausgeführt wird/werden, das Verfahren nach einem der Ansprüche 1 bis 5 durchgeführt wird; oder wobei das computerlesbare Speichermedium ein Computerprogramm oder Computeranweisungen speichert und, wenn das Computerprogramm oder die Computeranweisungen ausgeführt wird/werden, das Verfahren nach einem der Ansprüche 6 bis 8 durchgeführt wird.

11. Rückkopplungssystem für hybride automatische Wiederholungsaufforderung, HARQ-Rückkopplungssystem, umfassend ein Endgerät und eine Netzwerkvorrichtung, wobei das Endgerät dazu konfiguriert ist, das Verfahren nach einem der Ansprüche 1 bis 5 durchzuführen, und die Netzvorrichtung dazu konfiguriert ist, das Verfahren nach einem der Ansprüche 6 bis 8 durchzuführen.

12. Computerprogrammprodukt,

wobei das Computerprogrammprodukt ein Computerprogramm oder Computeranweisungen speichert und, wenn das Computerprogramm oder die Computeranweisungen ausgeführt wird/werden, das Verfahren nach einem der Ansprüche 1 bis 5 durchgeführt wird; oder wobei das Computerprogrammprodukt ein Computerprogramm oder Computeranweisungen speichert und, wenn das Computerprogramm oder die Computeranweisungen ausgeführt wird/werden, das Verfahren nach einem der Ansprüche 6 bis 8 durchgeführt wird.

## Revendications

1. Procédé de rétroaction de demande de répétition automatique hybride, HARQ, pour un réseau non terrestre, NTN, comprenant :

la réception (S502) des informations de commande de liaison descendante, DCI, à partir d'un dispositif réseau (101) ; la détermination, sur la base du DCI, d'un intervalle de créneau entre un premier bloc de données et une rétroaction HARQ correspondant au premier bloc de données ; la détermination (S503) d'un créneau cible sur la base d'une structure de trame et de l'intervalle de créneau déterminé, la structure de trame comportant des créneaux de liaison descendante, des créneaux de liaison montante et des créneaux de garde dans une trame ; et l'envoi (S504), au périphérique réseau dans l'emplacement cible, des informations HARQ correspondant au premier bloc de données, dans lequel la détermination de l'emplacement cible sur la base de la structure de trame comprend :

lorsqu'une valeur maximale de l'intervalle de créneau entre un bloc de données et un HARQ correspondant au bloc de données est supérieure ou égale à un seuil prédéfini dans la structure de trame, la détermination du créneau cible comme $\left[\frac{n}{N} + k\right] \times N + x$ , dans lequel k est l'intervalle de créneau, k est dans une unité d'un groupe de créneaux, une longueur du groupe de créneaux est N créneaux, N est un entier positif supérieur ou égal à 2, n est un créneau de réception du premier bloc de données, et x est un entier dans [0, N-1], dans lequel la détermination d'un emplacement cible sur la base d'une structure de trame comprend : lorsqu'une valeur maximale d'un intervalle de créneau entre un bloc de données quelconque et un HARQ correspondant au bloc de données est inférieure à un seuil prédéfini dans la structure de trame, la détermination du créneau cible comme n + k, dans lequel k est l'intervalle de créneau, k est dans une unité de créneau, et n est un créneau de réception du premier bloc de données.

2. Procédé selon la revendication 1, dans lequel x est déterminé sur la base de n ou d'un numéro de processus du HARQ correspondant au premier bloc de données.

3. Procédé selon la revendication 1 ou 2, dans lequel N = 2.

**4.** Procédé selon la revendication 1 ou 2, dans lequel un cas dans lequel la valeur maximale de l'intervalle de créneau entre le bloc de données et le HARQ correspondant au bloc de données est supérieure ou égale au seuil prédéfini est déterminé sur la base d'une quantité maximale de processus HARQ ou d'un rapport d'un créneau de liaison descendante à un créneau de garde à un créneau de liaison montante dans la structure de trame.

**5.** Procédé selon l'une quelconque des revendications 1 à 4, dans lequel le seuil prédéfini est 16.

**6.** Procédé de rétroaction de demande de répétition automatique hybride, HARQ, pour un réseau non terrestre, NTN, comprenant :

la détermination d'un intervalle de créneau entre un premier bloc de données et une rétroaction HARQ correspondant au premier bloc de données et à l'intervalle de créneau déterminé, la structure de trame comportant des créneaux de liaison descendante, des créneaux de liaison montante et des créneaux de garde dans une trame ;
l'envoi des informations de commande de liaison descendante, DCI, à un terminal (102) ;
la détermination d'un emplacement cible sur la base d'une structure de trame ; et
la réception, à partir du terminal dans l'emplacement cible, des informations HARQ correspondant au premier bloc de données,
dans lequel la détermination de l'emplacement cible sur la base de la structure de trame comprend :

lorsqu'une valeur maximale de l'intervalle de créneau entre un bloc de données et un HARQ correspondant au bloc de données est supérieure ou égale à un seuil prédéfini dans la structure de trame, la détermination du créneau cible comme $\left[\frac{n}{N} + k\right] \times N + x$, dans lequel k est l'intervalle de créneau, k est dans une unité d'un groupe de créneaux, une longueur du groupe de créneaux est N créneaux, N est un entier positif supérieur ou égal à 2, n est un créneau de réception du premier bloc de données, et x est un entier dans [0, N-1],
dans lequel la détermination d'un emplacement cible sur la base d'une structure de trame comprend :
lorsqu'une valeur maximale d'un intervalle de créneau entre un bloc de données quelconque et un HARQ correspondant au bloc de données est inférieure à un seuil prédéfini dans la structure de trame, la détermination du créneau cible comme n + k, dans lequel k est l'intervalle de créneau, k est dans une unité de créneau, et n est un créneau de réception du premier bloc de données.

**7.** Procédé selon la revendication 6, dans lequel x est déterminé sur la base de n ou d'un numéro de processus du HARQ correspondant au premier bloc de données.

**8.** Procédé selon la revendication 6 ou 7, dans lequel N = 2.

**9.** Appareil de rétroaction de demande de répétition automatique hybride (HARQ), comprenant un processeur, dans lequel une mémoire, une interface d'entrée et une interface de sortie dans lequel l'interface d'entrée est configurée pour recevoir des informations d'un appareil de communication autre que l'appareil de rétroaction HARQ, l'interface de sortie est configurée pour transmettre des informations à l'appareil de communication autre que l'appareil de rétroaction HARQ, et le processeur appelle un programme informatique stocké dans la mémoire pour réaliser :

le procédé selon l'une quelconque des revendications 1 à 5 ; ou
le procédé selon l'une quelconque des revendications 6 à 8.

**10.** Support de stockage lisible par ordinateur, dans lequel le support de stockage lisible par ordinateur stocke un programme informatique ou des instructions informatiques, et lorsque le programme informatique ou les instructions informatiques est/sont exécuté(s), le procédé selon l'une quelconque des revendications 1 à 5 est réalisé ; ou
dans lequel le support de stockage lisible par ordinateur stocke un programme informatique ou des instructions informatiques, et lorsque le programme informatique ou les instructions informatiques est/-sont exécuté(s), le procédé selon l'une quelconque des revendications 6 à 8 est réalisé.

**11.** Système de rétroaction de demande de répétition automatique hybride, HARQ, comprenant un terminal et un dispositif de réseau, dans lequel le terminal est configuré pour réaliser le procédé selon l'une des revendications 1 à 5, et le dispositif de réseau est configuré pour réaliser le procédé selon l'une des revendications 6 à 8.

**12.** Produit de programme informatique,

dans lequel le produit de programme informatique stocke un programme informatique ou des instructions informatiques, et lorsque le programme informatique ou les instructions informatiques est/sont exécuté(s), le procédé selon l'une quelconque des revendications 1 à 5 est réalisé ; ou

dans lequel le produit de programme informatique stocke un programme informatique ou des instructions informatiques, et lorsque le programme informatique ou les instructions informatiques est/sont exécuté(s), le procédé selon l'une des revendications 6 à 8 est réalisé.

FIG. 1

Downlink scheduling DCI
DL scheduling DCI
→ K0 →
Downlink data
DL data
→ K1 →
HARQ ACK/NACK

(a)

K0

| 0 | 1 | 2 | 3 | 4 | 5 | 6 | 7 | 8 | 9 |

K1

Slot 1 - PDCCH (DCI format 1_0/ 1_1)
Slot 3 - PDSCH
Slot 8 - HARQ-ACK

(b)

FIG. 2

EP 4 293 941 B1

1st UL/DL switching periodicity (P1)   2nd UL/DL switching periodicity (P2)

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 | 34 | 35 | 36 | 37 | 38 | 39 |

— 0.5 ms

←——————10 ms——————→     7 DL        4 S        9 UL

Unavailable range of a DL HARQ feedback (K1>16)   Available range of a DL HARQ feedback (K1≤16)

FIG. 3

FIG. 4

FIG. 5

```
           ┌──────────────┐  601
           │  Receiving   │ ╱
           │    unit      │
           └──────┬───────┘
                  │
           ┌──────┴───────┐  602
           │ Determining  │ ╱
           │    unit      │
           └──────┬───────┘
                  │
           ┌──────┴───────┐  603
           │ Sending unit │ ╱
           │              │
           └──────────────┘
```

FIG. 6

```
           ┌──────────────┐  701
           │ Determining  │ ╱
           │    unit      │
           └──────┬───────┘
                  │
           ┌──────┴───────┐  702
           │ Sending unit │ ╱
           │              │
           └──────┬───────┘
                  │
           ┌──────┴───────┐  703
           │  Receiving   │ ╱
           │    unit      │
           └──────────────┘
```

FIG. 7

801

Processor

802

Memory

805

803

Input interface

804

Output interface

FIG. 8

901

Input interface

902

Logic circuit

903

Output interface

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CMCC**. Discussion on timing relationship enhancements for NTN. *3GPP DRAFT; R1-2101042, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE*, 18 January 2021, vol. RAN WG1 (e-Meeting)
- **CMCC**. Discussion on implicit compatibility to support ATG scenarios in NTN. *3GPP DRAFT; R1-2006213, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE*, 07 August 2020, vol. RAN WG1 (e-Meeting)
- **ZTE**. Discussion on HARQ for NTN. *3GPP DRAFT; R1-2005965, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE*, 08 August 2020, vol. RAN WG1 (e-Meeting)
- **CMCC**. Discussion on UL transmission timing for NTN. *3GPP DRAFT; R1-1912535, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE*, 09 November 2019, vol. RAN WG1 (e-Meeting)